# EUROPEAN PATENT APPLICATION

(11) **EP 1 223 747 A2**
(43) Date of publication of application: **17.07.2002**
(21) Application number: 01850210.4
(22) Date of filing: 19.12.2001
(51) Int. Cl.: H04N 5/00

(54) **Method for storing information**

(30) Priority: 29.12.2000 SE 0004904
(71) Applicant: Nokia Corporation, 02150 Espoo (FI)
(72) Inventor: Dahlström, Anna, 582 32 Linköping (SE)
(74) Representative: Estreen, Lars

(57) **Abstract**

A method of storing information in a multimedia integrated receiver decoder arranged to be used with the Multimedia Home Platform standard. First, user commands input to the integrated receiver decoder are interpreted (110). Then, the user commands are collected (120) and saved (130) as data items in a database. Finally, the data items are made accessible to computer applications run on the integrated receiver decoder by means of an Application Program Interface (140). This makes it possible for agents to get information on viewing and box using habits for all channels.

## Description

### FIELD OF INVENTION

The present invention relates generally to a method and a terminal for storing user information in a multimedia terminal and more particularly to storing information regarding a user of a multimedia integrated receiver decoder arranged to be used with the Multimedia Home Platform standard.

### BACKGROUND

Multimedia terminals and applications are becoming increasingly popular. Such systems open up for new services and features for television users as well as for operators. A standard developed by the Project on Digital Video Broadcasting is the so-called Digital Video Broadcasting standard or simply DVB standard. Its main intent is to reap the benefits of technical standardisation. For more information regarding the DVB standard, reference is made to the publication "Digital Television MPEG 1 MPEG 2 And principles of the DVB System", H Benoit, ISBN 0-471-23810-4, or to the DVB Home Page on the Internet: http://www.dvb.org.

Coexisting with the DVB standard, there is a so-called Multimedia Home Platform (MHP) Specification, see for example the ETSI home page: http://www.etsi.org. This specification further describes hardware and software related matters relating to multimedia applications, such as application signalling and application life cycle.

With the power of today's set-top boxes and other Integrated Receiver Decoders (IRDs) it is possible to analyse the behaviour of television viewers by letting the IRD track the users channel switches etc. However, due to hardware and performance limitations, it is not possible for all applications to run simultaneous in the IRD. Also, a downloadable MHP application running on the IRD can only run inside the services (TV-channels) that signals the application in their so-called Application Information Table (AIT). Therefore a downloadable agent that the viewer would like to use can only collect information and learn the viewer's habits in some specific channels. This information would be more valuable if an agent application could be awake in all channels.

However, this is not feasible according to MHP standard. When service selection API is used only application signalled in that selected service Application Information Table (AIT) will be able to run. Tuning to another transport stream or channel can be done using the tuning or streaming media API to avoid that the application is being stopped. However, the usage of these APIs does not constitute service selection. The service selection should normally be used because otherwise the other services applications will not be loaded. To use the tuning API an application also needs a certain permission that probably will not be given to an application that wants to be the "one and only".

Thus, the problem is that a downloadable agent application can only have access to information about all viewing and IRD usage habits in the channels that it has permission to be alive in instead of all channels.

### SUMMARY OF THE INVENTION

An object of the present invention is to provide a method, a multimedia integrated receiver decoder and a system for storing information regarding a multimedia user as well as a computer program product wherein the above mentioned drawbacks are eliminated or at least mitigated and wherein it is possible for a downloaded agent application to have access to user information related to other channels or information streams.

The invention is based on the realisation that an Application Program Interface (API) can be used as a means for allowing several MHP applications to share common information. An IRD adapted to use the method according to the invention is provided with a resident application that collects the information and makes it accessible through an MHP like API for downloadable applications.

According to a first aspect of the invention there is provided a method as defined in claim 1.

According to a second aspect of the invention there is provided a multimedia integrated receiver decoder as defined in claim 6.

According to a third aspect of the invention there is provided a computer program product as defined in claim 7.

By using the method, the multimedia terminal, the system and the computer program product according to the invention the above objectives are attained. Thus, the invention makes it possible for agents to get information on viewing and box using habits for all channels.

This will give an agent more information to work on and it can therefor do a better job.

### BRIEF DESCRIPTION OF DRAWINGS

The invention is now described, by way of example, with reference to the accompanying drawings, in which:
FIG. 1 is an overall diagram of a communication system embodying the invention,
FIG. 2 is conceptual model of a user equipment utilising a MHP baseband processor for receiving information, and
FIG. 3 shows a flow chart describing the inventive method.

### DETAILED DESCRIPTION OF THE INVENTION

In the following, a preferred embodiment of a method and a terminal according to the invention will be described.

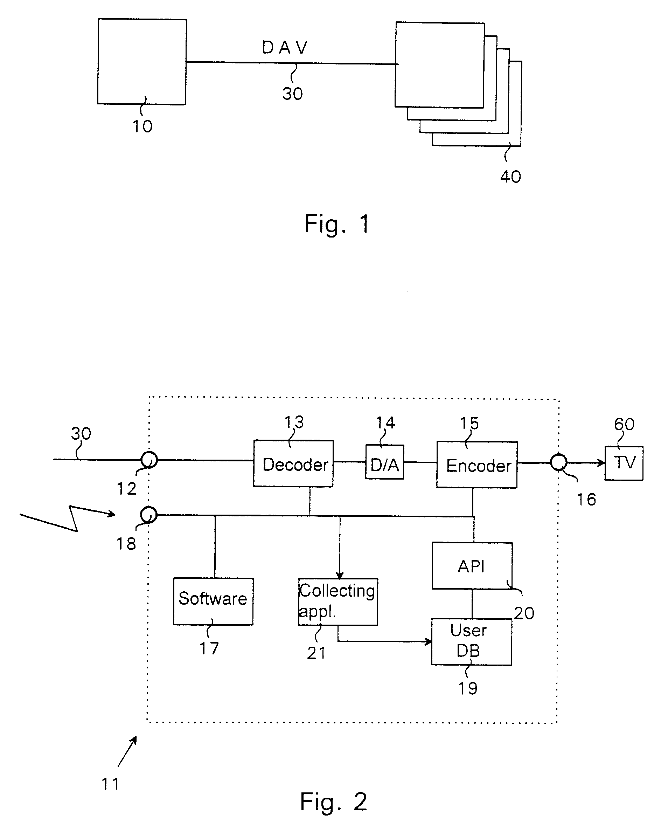

The backbone of a communication system for multimedia applications will now be briefly discussed with reference to figure 1. The backbone comprises a number of communication paths 30, one of which is shown in figure 1. The transmission medium supports high-speed transmission of digital information, such as audio (A), video (V) and data (D). A number of users are connected to the backbone, of which a first user 10 is shown in the figure. This user 10 functions as a receiver of multimedia information, such as a subscriber of television programmes, provided by a number of service provides, designated 40 in the figure. Each user has a so-called Integrated Receiver Decoder (IRD) or Set-top Box arranged to process the incoming information and sometimes also function as a transmitter of information.

A method covered by a standard, such as the above mentioned Multimedia Home Platform, could be used to send the information to the user 10 through receiver equipment at the user, which will now be discussed with reference to figure 2, wherein an IRD 11 is shown. A transport stream arriving from the transmission medium 30 is received at an input 12 and is directed to a video and audio decoder 13, wherein the signals are decoded. The decoded audio and video signals are synchronised in the decoder 13 and the decoded signals are then directed to a digital to analogue (D/A) converter 14, wherein the digital information is converted to analogue form useable by a TV encoder, such as a PAL encoder 15. The encoder 15 supplies the encoded information through an output 16 and to a presentation unit, in this case a TV set 60, on which the information is displayed as a TV programme, for example. The data information can comprise several kinds of information.

The operation of the IRD 11 is controlled by means of software 17 run on suitable processor hardware (not shown). Thus, the software is stored in memory and is run either on request by the user or in response to some event. User requests are input to a second input 18, which could comprise an IR port, for example, communicating with a remote controller (not shown).

Information regarding user commands is collected by a collection application 21 residing in the IRD 19 and the information is stored in user database 19. The database contains relevant information on user behaviour, of which the following is a non-exhaustive list: What TV programmes are watched, the genre of programmes being watched, what kind of commercials the viewer prefers, how long programs the viewer watches, which sites on the Internet the viewer visits, which programs the viewer records, which programs the viewer saves for long term, which parts of the program the viewer watches (in case the program is segmented as suggested in the TV-Anytime standard, form example), etc.

The invention is based on the use of an Application Program Interface (API) 20 in the IRD 11. An API is the calls, subroutines, or software interrupts that comprise a documented interface so that a (usually) higher-level program such as an application program can make use of the (usually) lower-level services and functions of another application, operating system, network operating system, driver, or other lower-level software program.

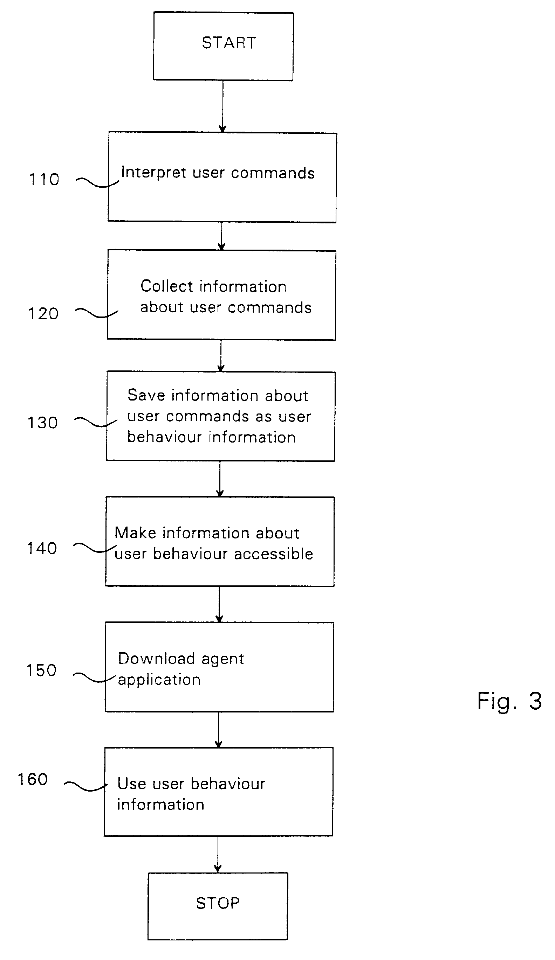

The method according to the invention will now be described with reference to the flow chart in fig. 3. First, in step 110, the collection application 21, see fig. 2, interprets user commands input through input 18, for example. The interpreted commands are collected to give information about the user's behaviour, step 120. This information is then, in step 130, stored in the user database 19. The application that collects the information and saves it could be done in any programming language. The saving could be done to RAM, flash or to a non-volatile memory, such as a hard disk. The structure of the saved data is preferably implementation dependent.

Thereafter, in step 140, the user information is made accessible by means of the API 20, see fig. 2. The API from which the downloadable applications access the information should be specified in a standardised way like MHP specification to ensure interoperability between different boxes and applications.

When later a downloadable agent application is downloaded, step 150, this agent can make use of the user information gathered in steps 110-130. In that way, the agent application can make "intelligent" suggestions about choice of language, recording options etc. by accessing the user database through the use of the API 20 residing in the IRD 11, step 160.

Preferred embodiments of the invention have been described. The person skilled in the art realises that these can be varied within the scope of the appended claims. Thus, the inventive idea is applicable to the Multimedia Home Platform standard but could also be used with other similar standards and application frameworks, wherein the problem of coexisting applications is present.

There is possible to regulate the permissions a downloadable agent will have to the information. Thus, the permissions for agent applications to have access to APIs for external contact can be denied to make sure that the users (TV-viewer) privacy is kept.

## Claims

1. A method of storing information in a multimedia integrated receiver decoder (11) arranged to be used with the Multimedia Home Platform standard, said method being **characterized by** the following steps:
a) interpreting user commands (110) input to said integrated receiver decoder,
b) collecting said user commands (120),
c) saving said user commands (130) as data items in a database, and
d) making said data items accessible to computer applications run on said integrated receiver decoder by means of an Application Program Interface (140).

2. The method according to claim 1, comprising the additional step of:
e) downloading an agent application adapted to access said data items through said Application Program Interface.

3. The method according to claim 2, wherein said additional step of downloading comprises using said data items to facilitate the operation of said integrated receiver decoder (11).

4. The method according to claim 2 or 3, wherein there is provided for denying access to said data items for agent applications.

5. The method according to any of claims 1-4, wherein said data items comprise any of the following user information: what TV programmes are watched, the genre of programmes being watched, what kind of commercials the viewer prefers, how long programs the viewer watches, which sites on the Internet the viewer visits, which programs the viewer records, which programs the viewer saves for long term, and which parts of the program the viewer watches.

6. A multimedia integrated receiver decoder (11) arranged to be used with the Multimedia Home Platform standard, said integrated receiver decoder being
**characterized by**
- elements (17,21) for interpreting user commands input to said integrated receiver decoder,
- elements (21) for collecting said user commands,
- elements (21) for saving said user commands as data items in a database, and
- an Application Program Interface (20) making said data items accessible to computer applications run on said integrated receiver decoder.

7. A computer program product directly loadable into the internal memory of a multimedia integrated receiver decoder (11), said computer program product comprising software code portions for performing the following steps:
a) interpreting user commands (110) input to said integrated receiver decoder,
b) collecting said user commands (120),
c) saving said user commands (130) as data items in a database (19), and
d) making said data items accessible to computer applications run on said integrated receiver decoder by means of an Application Program Interface (140).
